# EUROPEAN PATENT APPLICATION

(11) **EP 1 806 687 A1**
(43) Date of publication of application: **11.07.2007**
(21) Application number: 05111713.3
(22) Date of filing: 05.12.2005
(51) Int. Cl.: G06Q 10/00

(54) **Time depending protection of available quantities**

(71) Applicant: SAP AG, 69190 Walldorf (DE)
(72) Inventor: Heise, Torsten, 69168, Wiesloch (DE); von Helmolt, Hans-Ulrich, 69126, Heidelberg (DE)
(74) Representative: Schneider, Günther Martin

(57) **Abstract**

A computer-implemented method and system for processing a product order, the method comprising the following steps: receiving a product order from a customer; determining, based on the received product order, at least one of a date at which the products should be available at a location, and a date by which the products should be issued out of the location; further comprising: calculating, on the basis of the at least one date determined in the preceding step, a date at which sourcing should be initiated; and if the sourcing due date is earlier than a predetermined date, performing an availability check for the ordered products on the basis of the dates determined in the preceding steps.

## Description

### BACKGROUND OF THE INVENTION

The present invention relates to methods and systems for processing product orders within e-business systems.

Today, the success of a business company depends essentially on the requirement that customer demands on goods and/or services be fulfilled precisely, cost-efficiently and in time. Therefore, many companies make use of a supply chain management system to control and optimize their production and delivery processes.

Supply chain management may comprise the process of coordinating the flow of goods, services, information and/or finances between the involved parties such as manufactures, suppliers, wholesalers, retailers, and consumers. This process may include, among others, order processing, information feedback, and timely delivering the ordered goods and/or services.

### STATE OF THE ART

One process within supply chain management is the check as to whether a quantity of products (ordered by a customer) is available at some location at a given date. This is denoted in the following as available-to-promise (ATP) check.

A future demand for a certain product may consume the available quantity of this product during an ATP check. As a result it is possible that the ATP check of another requirement for the same product which is needed earlier cannot be confirmed completely because the available quantity was already consumed by the previous ATP checked requirement.

### SUMMARY OF THE INVENTION

In general, the present invention provides a computer-implemented method for processing a product order, the method comprising the following steps:
receiving a product order from a customer;
determining, based on the received product order, at least one of a date at which the products should be available at a location, and a date by which the products should be issued out of the location;
further comprising:
   calculating, on the basis of the at least one date determined in the preceding step, a date at which sourcing should be initiated; and
   if the sourcing due date is earlier than a predetermined date, performing an availability check for the ordered products on the basis of the dates determined in the preceding steps.

Further embodiments of the invention may comprise one or more of the following features.

The predetermined date may be the date of processing the product order.

A step of initiating a process which provides for performing an availability check at a given later date may be executed if the sourcing due date is later than the predetermined date.

The dates may further comprise time points.

Furthermore, a date may be determined at which the products should be ready to be loaded for transport.

Yet further, a date may be determined at which the transported products should be unloaded at the customer.

A date may be determined from which organization of transport of the products should begin.

In a further aspect, the invention provides a computer-readable medium comprising computer-executable instructions for performing the inventive method as described above, when loaded into a computer system.

Furthermore, according to the invention a system for processing a product order is provided, the system comprising:
means for receiving a product order from a customer;
a processor which determines, based on the received product order, at least one of a date at which the products should be available at a location, and a date by which the products should be issued out of the location; and calculates, on the basis of the at least one date determined in the preceding step, a date at which sourcing should be initiated; and
if the sourcing due date is earlier than a predetermined date, the processor performs an availability check for the ordered products on the basis of the determined dates.

Thus, before the ATP check is performed, a new date type is calculated, the Sourcing Due Date, based on a given time point like the requested delivery date or the material availability date. If the calculated sourcing due date is earlier than a given time limit (e. g. the actual date and time), the ATP check is performed in the normal way and it tries to confirm the requirement. If the sourcing due date is later than the time limit, no ATP check is performed for this requirement and the available quantity can be used to confirm another, earlier needed requirement. That means the available quantity is protected before being consumed by requirements needed in the future.

Until now the only way to confirm early needed requirements before later needed requirements which were created before, was to do a backorder processing of all requirements of a product with a sort profile depending on the material availability date.

By using of the sourcing due date the probability to get a confirmation of an early needed requirement is higher than without using it. So it is possible to confirm early needed requirements already during creation of the requirement, it is no longer necessary to wait until a sort of backorder processing is performed to redistribute the available quantity from the later to the earlier requirements.

### BRIEF DESCRIPTION OF DRAWINGS

The accompanying drawings, which constitute a part of this disclosure, illustrate various embodiments and aspects of the present invention and, together with the description, explain the principles of the invention.

In the drawings:
- Fig. 1: illustrates an order and delivery process between customer and supplier;
- Fig. 2: illustrates a situation of a product availability check;
- Fig. 3: illustrates a further situation of a product availability check;
- Fig. 4: illustrates scheduling of dates and activities over the time; and
- Fig. 5: illustrates the program flow according to an embodiment of the invention.

### DETAILED DESCRIPTION

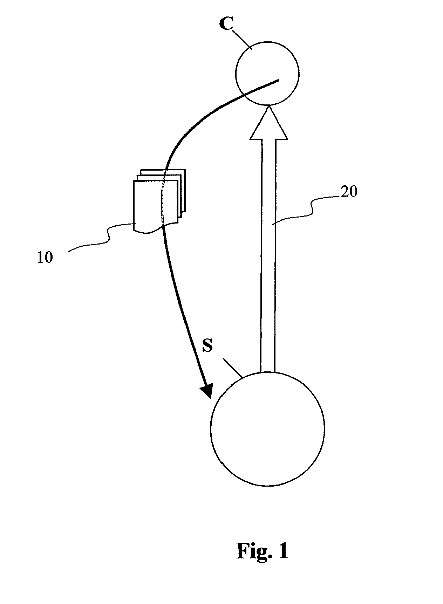

Fig. 1 illustrates an order and delivery process between customer and supplier. A customer C sends an order 10 to the supplier S. The order 10 may be in the form of an electronic order transmitted in the frame of an online transaction processing system or a traditional order transmitted by mail. The order 10 comprises at least information about the ordered product and the ordered quantity.

Upon receiving the customer order 10, an availability check process is performed. The ATP check may use time series buckets to store the information about receipt and requirement elements. Receipt elements are products or goods which are available for being consumed to satisfy one or more requirement elements, i.e., orders. If the supplier S is able to provide the required quantity of products, the ATP check confirms the order, and the products may be delivered, 20, at a given time.

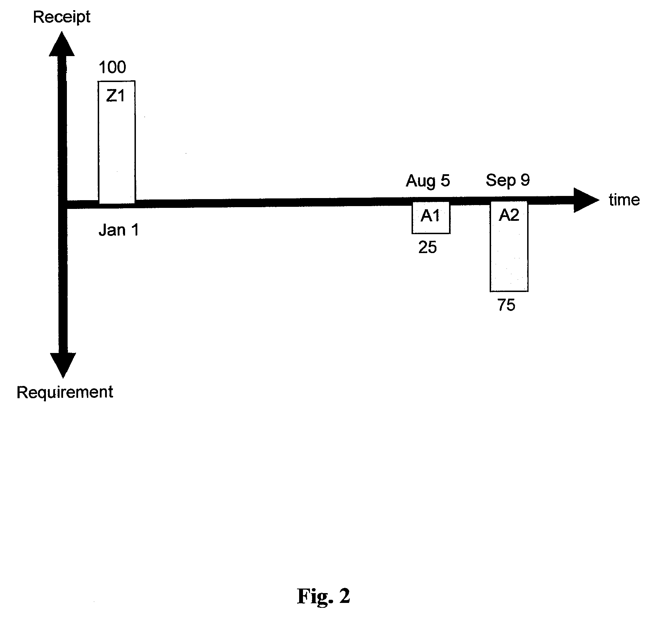

Fig. 2 illustrates, by way of example and in no way limitative, a situation of a product availability check within a supply chain management system. The receipt element Z1 represents a quantity of products available at the location where the ATP check is to be performed. The requirements A1, A2 represent ordered quantities of products, i.e., quantities needed at a given date.

In the following, the term "date" is understood to specify either a day of the year, a time point of a day, or both day and time point.

In Fig. 2, one receipt element Z1 about a quantity of 100 pieces of a product is available at 1. January, and requirement elements A1 about 25 pieces, and A2 about 75 pieces are required at 5. August, and at 9. September, respectively. The receipt element can exactly satisfy the two requirements A1, A2. If the receipt element is counted as a positive quantity and the requirements are counted as negative quantities, the sum is zero: 100 - (25 + 75) = 0.

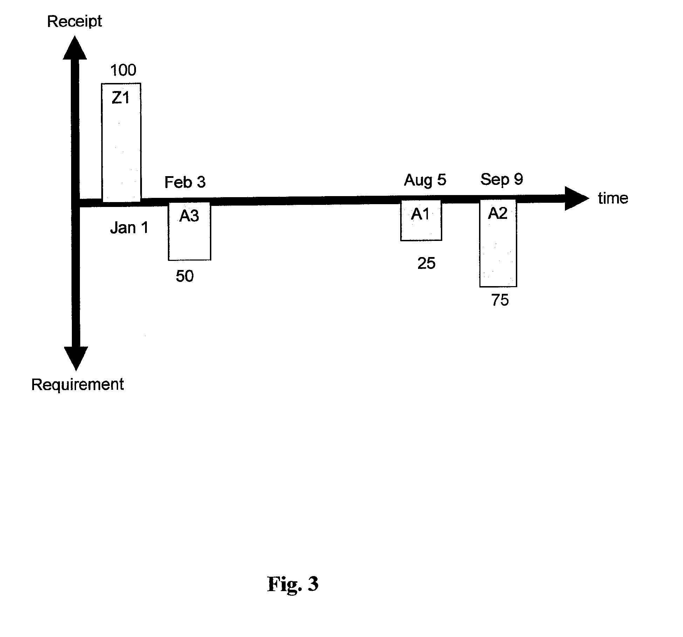

If after that, a third requirement A3 about 50 pieces is generated, for example a requirement of a new created sales order as illustrated in Fig. 3, the receipt element Z1 cannot be used to satisfy this requirement, even if the date of this requirement is for example 3. February, i.e., before the dates of the requirement elements A1 and A2. The sum of the receipt and requirement elements would be negative: 100 - (25 + 75 + 50) = -50. The reason why requirement A3 is not confirmed is that it is the last one created.

In the embodiment of the invention different date types before and within the actual ATP check are determined. For this determination, different durations, working times and time zones are used which can be determined in various ways, e.g. by condition technique, product-location master data, and transportation lanes. The following date types are determined:
Material Availability Date - MBDAT;
Loading Date - LDDAT;
Goods Issue Date - WADAT;
Delivery Date - LFDAT;
Unloading Date - ELDAT;
Transport Dispo Date - TDDAT.

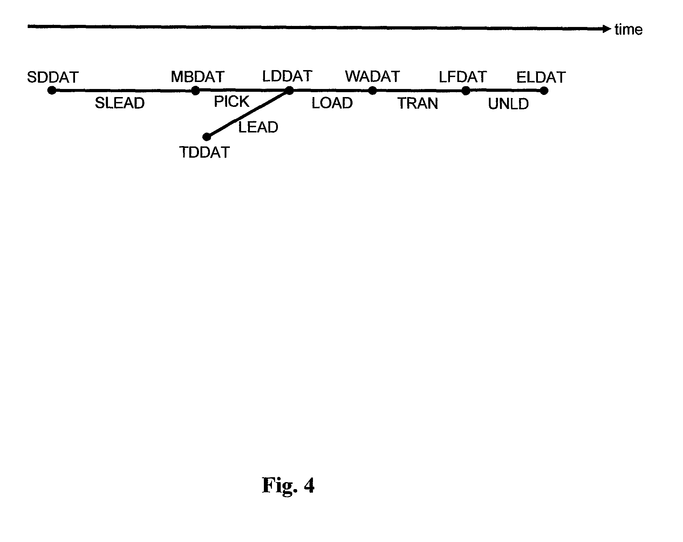

At these dates, specific activities related to fulfilling the order are to be initiated. The scheduling of these dates and activities over the time t is illustrated in Fig. 4. The activities are as follows: At the Material Availability Date MBDAT, the required quantity of products has to be available at the location at some storage place. Then, picking is to be started which means removing the products from the storage location. This activity has to be accomplished at the Loading Date LDDAT. At Transport Dispo Date TDDAT, the transportation means must be prepared. The activity is denoted as Transport Leading.

At Loading Date, the loading of the products onto the transport means is initiated. The corresponding activity is denoted as LOAD. Loading has to be finished at the Goods Issue Date. This is the date by which the products leave the site in order to be transported to the destination. The destination is to be reached at the Delivery Date. Then, unloading begins, which has to be ended at unloading date.

The different date types and their connections to each other together with the way how durations, working times and time zones are denoted in the following a scheduling processing scheme.

For the ATP check, the material availability date MBDAT is used. If the ATP check cannot confirm the requirement at this date, but at a later one, the scheduling is called again, in order to recalculate all date types based on the material availability date given by the ATP. These are the confirmed dates which are returned to the calling application or system.

According to the invention, the standard scheduling processing scheme is enhanced by adding new date types, and activities. For this business requirement, a new scheduling processing scheme is obtained which determines the standard date types, and additionally a new date type, the Sourcing Due Date SDDAT.

The ATP process comprises the steps of preparing the data for the ATP check, executing the ATP check, and preparing the results of the ATP check.

In the first step, i.e., before the actual ATP check is executed, a routine is called in which the scheduling processing is performed for each requirement, to determine the set of date types starting from a given date, e.g., the delivery date LFDAT. This routine calculates the date types as mentioned above: ELDAT - Unloading Date, LFDAT - Delivery Date, WADAT - Goods Issue Date, LDDAT - Loading Date, MBDAT - Material Availability Date, TDDAT - Transport Planning Date.

Furthermore, the new introduced Sourcing Due Date, SDDAT, is calculated. For calculating the Sourcing Due date a special logic is implemented within this routine.

The Sourcing Due Date is used in the following way. A calculated Sourcing Due Date in the past does not trigger an automatically forward scheduling. Only if one of the other dates, e.g. the Material Availability Date is in the past, the scheduling shifts the corresponding date, e.g. the Material Availability Date, to now and starts the scheduling from there again. The Sourcing Due Date stays in the past.

After the scheduling is performed, the Sourcing Due Date is compared with now, i.e., the current date. There are two different possibilities of this comparison:
- The Sourcing Due Date is less or equal now, i.e., in the past, or now;
- The Sourcing Due Date is greater now, i.e., in the future.

In the first case the ATP check is performed. In the second case, the requirement is not checked by the ATP checking procedure, and the confirmed quantity is zero. The receipt elements can be used to confirm other requirements which must be satisfied earlier, this means requirements with a Sourcing Due Date less or equal now or requirements without a Sourcing Due Date.

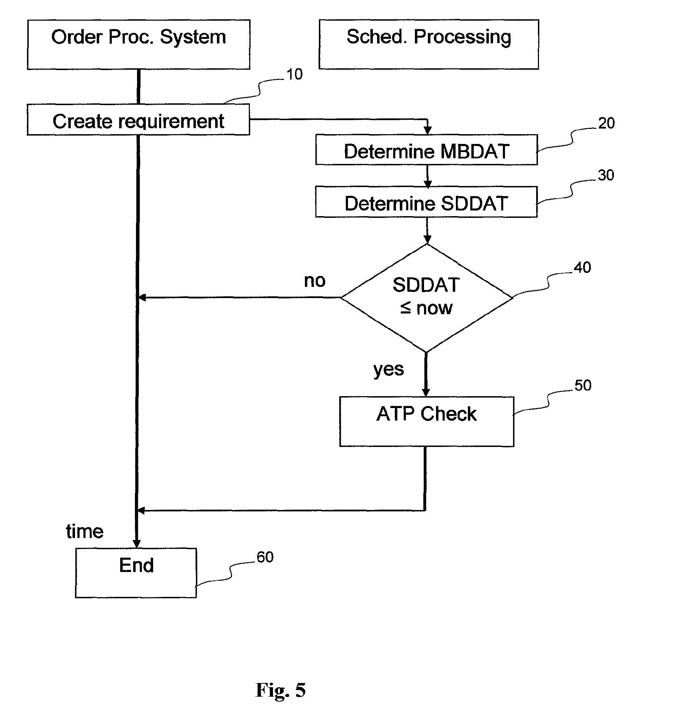

Fig. 5 illustrates a program flow of the inventive method. In step 10, the supplier receives a product order from a customer. Based on the received order, a step 20 is performed of determining, based on the received product order, at least one of a date at which the products should be available at a location, and a date by which the products should be issued out of the location.

Then, step 30 is executed which comprises determining, on the basis of the at least one date determined in the preceding step, a date SDDAT at which sourcing should be initiated.

Then, in step 40, it is checked whether or not the sourcing due date SDDAT is earlier (i.e., lower) than, or equal to, a predetermined date. If so, the programs flow branches to step 50 where an availability check for the ordered products is performed on the basis of the dates determined in the preceding steps. Otherwise, if the sourcing due date SDDAT is later than a predetermined date, no availability check is done at this time, and the program flow ends at this point, step 60.

The predetermined date as mentioned in the above paragraph can be the date of processing the product order, i.e., the current date.

A further embodiment of the invention provides a step of initiating a process which provides for performing an availability check at a given later date if, in step 40, the Sourcing Due Date is later than the predetermined date. This process can be some kind of back order processing.

The present techniques can be implemented in digital electronic circuitry, or in computer hardware, firmware, software, or in combinations of them. Apparatus of the invention can be implemented in a computer program product tangibly embodied in a machine-readable storage device for execution by a programmable processor. Method steps according to the invention can be performed by a programmable processor executing a program of instructions to perform functions of the invention by operating on the basis of input data, and by generating output data. The invention may be implemented in one or several computer programs that are executable in a programmable system, which includes at least one programmable processor coupled to receive data from, and transmit data to, a storage system, at least one input device, and at least one output device, respectively. Computer programs may be implemented in a high-level or object-oriented programming language, and/or in assembly or machine code. The language or code can be a compiled or interpreted language or code. Processors may include general and special purpose microprocessors. A processor receives instructions and data from memories, in particular from read-only memories and/ or random access memories. A computer may include one or more mass storage devices for storing data; such devices may include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by or incorporated in ASICs (application-specific integrated circuits).

The computer systems or distributed computer networks as mentioned above may be used, for example, for producing goods, delivering parts for assembling products, controlling technical or economical processes, or implementing telecommunication activities.

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical or text user interface through which computer programs interact with users.

A computer may include a processor, memory coupled to the processor, a hard drive controller, a video controller and an input/output controller coupled to the processor by a processor bus. The hard drive controller is coupled to a hard disk drive suitable for storing executable computer programs, including programs embodying the present technique. The I/O controller is coupled by means of an I/O bus to an I/O interface. The I/O interface receives and transmits in analogue or digital form over at least one communication link. Such a communication link may be a serial link, a parallel link, local area network, or wireless link (e.g. an RF communication link). A display is coupled to an interface, which is coupled to an I/O bus. A keyboard and pointing device are also coupled to the I/O bus. Alternatively, separate buses may be used for the keyboard pointing device and I/O interface.

In the foregoing specification, the invention has been described with reference to specific embodiments thereof. It will, however, be evident that various modifications and changes can be made thereto without departing from the broader spirit and scope of the invention as set forth in the appended claims. The specification and drawings are, accordingly, to be regarded in an illustrative rather than a restrictive sense.

## Claims

1. A computer-implemented method for processing a product order, the method comprising the following steps:
receiving a product order from a customer;
determining, based on the received product order, at least one of a date at which the products should be available at a location, and a date by which the products should be issued out of the location;
further comprising:
calculating, on the basis of the at least one date determined in the preceding step, a date at which sourcing should be initiated; and
if the sourcing due date is earlier than a predetermined date, performing an availability check for the ordered products on the basis of the dates determined in the preceding steps.

2. The method of claim 1, wherein the predetermined date is the date of processing the product order.

3. The method of claim 1, wherein a step of initiating a process which provides for performing an availability check at a given later date is executed if the sourcing due date is later than the predetermined date.

4. The method of claim 1, wherein the dates further comprise time points.

5. The method of claim 1, further comprising determining a date at which the products should be ready to be loaded for transport.

6. The method of claim 1, further comprising determining a date at which the transported products should be unloaded at the customer.

7. The method of claim 1, further comprising determining a date from which organization of transport of the products should begin.

8. A computer-readable medium comprising computer-executable instructions for performing the method according to claim 1, when loaded into a computer system.

9. A system for processing a product order, the system comprising:
means for receiving a product order from a customer;
a processor which determines, based on the received product order, at least one of a date at which the products should be available at a location, and a date by which the products should be issued out of the location; and calculates, on the basis of the at least one date determined in the preceding step, a date at which sourcing should be initiated; and
if the sourcing due date is earlier than a predetermined date, the processor performs an availability check for the ordered products on the basis of the determined dates.

10. The system of claim 9, wherein the predetermined date is the date of processing the product order.

11. The system of claim 9, wherein the processor is further adapted for executing a step of initiating a process which provides for performing an availability check at a given later date is executed if the sourcing due date is later than the predetermined date.

12. The system of claim 9, wherein the dates further comprise time points.

13. The system of claim 9, wherein the processor is further adapted for executing a step of determining a date at which the products should be ready to be loaded for transport.

14. The system of claim 9, wherein the processor is further adapted for executing a step of determining a date at which the transported products should be unloaded at the customer.

15. The system of claim 9, wherein the processor is further adapted for executing a step of determining a date from which organization of transport of the products should begin.
